# FASCICULE DE BREVET EUROPEEN

(11) **EP 2 396 949 B1**
(45) Date de publication et mention de la délivrance du brevet: **26.04.2017**
(21) Numéro de dépôt: 10708256.2
(22) Date de dépôt: 01.02.2010
(51) Int. Cl.: H04L 29/08, G06Q 10/10, H04N 7/15, H04L 29/06, H04L 12/18

(54) **COMMUNICATION MULTIMEDIA DANS UN ENVIRONNEMENT VIRTUEL**
MULTIMEDIA-KOMMUNIKATION IN EINER VIRTUELLEN UMGEBUNG
MULTIMEDIA COMMUNICATION IN A VIRTUAL ENVIRONMENT

(30) Priorité: 10.02.2009 FR 0950817
(43) Date de publication de la demande: 21.12.2011
(73) Titulaire: ALCATEL LUCENT, 92100 Boulogne-Billancourt (FR)
(72) Inventeur: CABASSE, Gilbert, F-29228 Brest (FR); BONNAUD, Fabrice, F-29228 Brest (FR)
(74) Mandataire: Mouney, Jérôme
(86) Numéro de dépôt international: PCT/FR2010/050155
(87) Numéro de publication internationale: WO 2010/092276

(56) Documents cités:
- EP-A- 0 950 956
- EP-A- 1 473 650
- WO-A-2008/052972
- WO-A-2008/106196
- US-A1- 2007 011 273
- US-A1- 2007 050 716
- US-A1- 2008 298 571
- US-A1- 2008 303 811
- US-B1- 7 124 164
- HONDA S ET AL: "A VIRTUAL OFFICE ENVIRONMENT BASED ON A SHARED ROOM REALIZING AWARENESS SPACE AND TRANSMITTING AWARENESS INFORMATION" PROCEEDINGS OF THE INTERNATIONAL SYMPOSIUM ON HUMAN FACTORS INTELECOMMUNICATIONS, XX, XX, 12 mai 1997 (1997-05-12), pages 287-295, XP002074473

## Description

La présente invention concerne des communications multimédias dans un environnement virtuel. Plus particulièrement, l'invention concerne l'établissement de communications vidéo et audio entre des utilisateurs aptes à se déplacer virtuellement dans un environnement virtuel.

Des systèmes de messagerie instantanée permettent à un utilisateur d'être vu "occupé" par d'autres utilisateurs. Par exemple, si l'utilisateur est en conversation téléphonique, il peut toutefois souhaiter qu'un autre utilisateur se joigne à la conversation ou attende que la conversation soit terminée.

Lorsqu'un premier utilisateur désire parler avec un deuxième utilisateur, il est souhaitable que le premier utilisateur appelle le deuxième utilisateur à un moment approprié, notamment si l'objet de l'appel n'est pas une urgence.

Dans une entreprise, des collègues peuvent communiquer entre eux sur des sujets urgents, ou bien de manière plus informelle ou encore sur des sujets moins urgents. Il est considéré normal qu'un collègue dérange un autre collègue pour une communication urgente. Des collègues peuvent discuter entre eux lors de contacts informels lorsqu'ils se rencontrent physiquement, par exemple dans un couloir ou prés d'une machine à café. Lorsque des collègues ne travaillent pas au même endroit, dans le cas où l'entreprise est répartie sur différents sites ou un collègue est en télétravail, des contacts informels entre collègues ne sont pas naturels puisqu'un collègue ne souhaite généralement pas déranger un autre collègue en l'appelant pour un sujet qui n'est pas prioritaire ou urgent.

Par ailleurs, un utilisateur souhaitant appeler un autre utilisateur ne dispose pas d'indicateur pertinent sur la tâche précise dudit autre utilisateur. Un simple indicateur "occupé" diffusé par un utilisateur aux différents utilisateurs qui sont de potentiels appelants ne doit pas empêcher un collaborateur d'entrer en communication pour collaborer à la tâche en cours d'exécution par l'utilisateur. Puisqu'un utilisateur change fréquemment de tâche, et que les priorités entre les tâches varient très souvent, il est difficile pour l'utilisateur de filtrer des appels via des indicateurs ou des règles formelles.

Des environnements virtuels permettant l'interaction entre leurs utilisateurs sont déjà connus, tels ceux divulgués par les brevets WO2008106196, EP1473650, JPH11250278, et US2007050716. Un objectif de l'invention est de remédier aux inconvénients précédents en simulant virtuellement des interactions entre au moins deux utilisateurs se rencontrant physiquement.

L'invention est définie par les revendications indépendantes de procédé 1, de dispositif 11 et de programme 12 et par leurs dépendantes. Pour atteindre cet objectif, un procédé pour établir une communication multimédia entre un utilisateur visité et au moins un utilisateur visiteur qui sont initialement présents respectivement dans des espaces virtuels différents dans un environnement virtuel géré par un serveur auquel sont connectés des terminaux respectifs de l'utilisateur visiteur et de l'utilisateur visité, est caractérisé en ce qu'il comprend les étapes suivantes :
suite à un déplacement virtuel de l'utilisateur visiteur dans un espace virtuel donnant accès à l'espace virtuel dans lequel est présent l'utilisateur visité, un établissement d'une communication vidéo entre l'utilisateur visité et l'utilisateur visiteur, et
suite à un déplacement virtuel de l'utilisateur visiteur dans l'espace virtuel dans lequel est présent l'utilisateur visité, un établissement d'une communication audio entre l'utilisateur visité et l'utilisateur visiteur.

Avantageusement, l'invention permet à des utilisateurs de recourir dans un premier temps à une communication vidéo pour partager leurs disponibilités et leurs intentions, avant d'utiliser dans un deuxième temps une communication audio pour une discussion orale.

Avantageusement, l'invention favorise des contacts informels entre l'utilisateur visité et l'utilisateur visiteur, qui sont par exemple des employés distants d'une entreprise, la distance étant due par exemple au télétravail ou à une implantation de l'entreprise sur plusieurs sites.

L'utilisateur visiteur peut juger s'il peut déranger l'utilisateur visité, et ce dernier, même s'il est occupé, peut faire des signes à l'utilisateur visiteur.

Comme dans la vie "réelle", un lien visuel est établi avant un lien auditif et le lien visuel peut être établi même si l'appelé est occupé.

Selon une autre caractéristique de l'invention, l'utilisateur visité peut recevoir un avertissement visuel et/ou sonore après le déplacement virtuel de l'utilisateur visiteur dans l'espace virtuel donnant accès à l'espace virtuel dans lequel est présent l'utilisateur visité et avant l'établissement de la communication vidéo entre l'utilisateur visité et l'utilisateur visiteur.

Selon une autre caractéristique de l'invention, l'utilisateur visiteur peut être déplacé virtuellement dans l'espace virtuel dans lequel est présent l'utilisateur visité à la demande de l'utilisateur visiteur, si l'utilisateur visité a préalablement autorisé l'accès à l'espace virtuel dans lequel est présent l'utilisateur visité pour l'utilisateur visiteur. L'utilisateur visiteur peut être également déplacé virtuellement dans l'espace virtuel dans lequel est présent l'utilisateur visité à la demande de l'utilisateur visité.

Selon une autre caractéristique de l'invention, lors de la communication vidéo entre l'utilisateur visité et l'utilisateur visiteur, l'utilisateur visiteur peut ne recevoir aucun flux de communication vidéo émis par l'utilisateur visité, et éventuellement l'utilisateur visité peut ne recevoir aucun flux de communication vidéo émis par l'utilisateur visiteur.

L'invention concerne également un serveur pour établir une communication multimédia entre un utilisateur visité et au moins un utilisateur visiteur qui sont initialement présents respectivement dans des espaces virtuels différents dans un environnement virtuel géré par le serveur auquel sont connectés des terminaux respectifs de l'utilisateur visiteur et de l'utilisateur visité, caractérisé en ce qu'il comprend :
des moyens pour établir une communication vidéo entre l'utilisateur visité et l'utilisateur visiteur, suite à un déplacement virtuel de l'utilisateur visiteur dans un espace virtuel donnant accès à l'espace virtuel dans lequel est présent l'utilisateur visité, et
des moyens pour établir une communication audio entre l'utilisateur visité et l'utilisateur visiteur, suite à un déplacement virtuel de l'utilisateur visiteur dans l'espace virtuel dans lequel est présent l'utilisateur visité.

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication pour établir une communication multimédia entre au moins deux utilisateurs à travers un réseau de paquets selon l'invention ; et
- la figure 2 est un algorithme d'un procédé pour établir une communication multimédia entre au moins deux utilisateurs à travers un réseau de paquets selon l'invention.

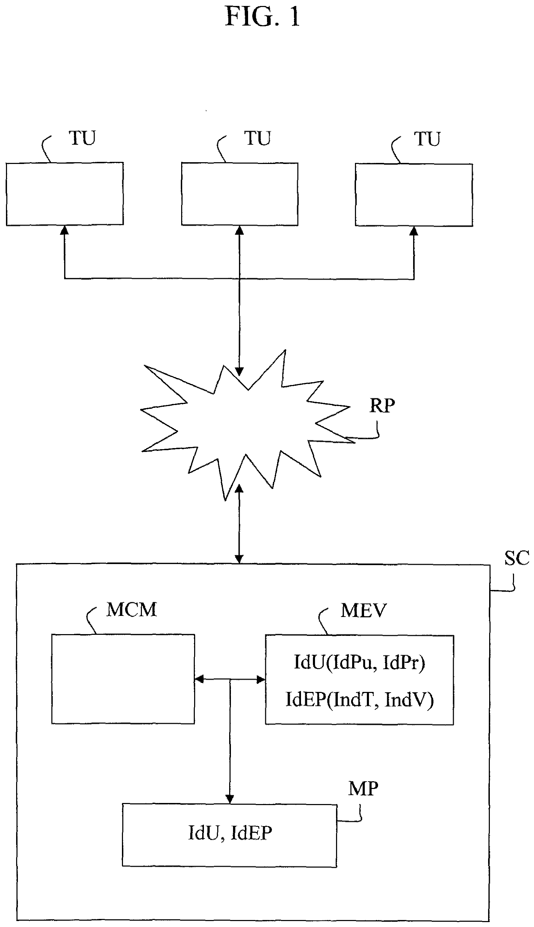

En référence à la figure 1, un système de communication selon une réalisation de l'invention comprend un serveur de communication SC et un ensemble de terminaux d'utilisateurs TU communiquant entre eux via un réseau de paquets RP.

Le réseau de paquets RP peut être un réseau à haut débit de type IP ("Internet Protocol" en anglais), tel que l'internet ou un intranet ou encore un réseau privé spécifique à une société. Par exemple, chacun des terminaux TU peut être un ordinateur personnel ou un terminal intelligent pouvant communiquer avec le réseau de paquets par une liaison filaire ou sans fil.

Chaque terminal TU comprend des moyens pour établir une communication multimédia, telle qu'une visioconférence, ces moyens incluant en particulier une caméra, un écran, un microphone et des enceintes. Chaque terminal comprend en outre une interface logicielle permettant à l'utilisateur d'exécuter des services offerts par le serveur de communications SC, et notamment d'établir des communications multimédias avec d'autres utilisateurs en se déplaçant dans l'environnement virtuel.

En particulier, lorsque deux utilisateurs sont en communication vidéo, chaque utilisateur voit sur son écran de terminal la vidéo de l'autre utilisateur prise au moyen de la caméra, et lorsque les deux utilisateurs sont en communication audio, chaque utilisateur entend via les enceintes la voix de l'autre utilisateur prise au moyen du microphone.

Le serveur de communication SC comprend un module d'espace virtuel MEV, un module de présence MP et un module de communication multimédia MCM.

En variante, les fonctionnalités du module d'espace virtuel MEV, du module de présence MP et du module de communication multimédia MCM sont respectivement incorporées dans des serveurs distincts qui communiquent entre eux.

En variante, les fonctionnalités du module d'espace virtuel MEV, du module de présence MP et/ou du module de communication multimédia MCM sont incorporées dans chaque terminal TU, le serveur SC étant alors restreint à mettre en relation ces modules entre eux.

Dans la suite de la description, le terme module peut désigner un dispositif, un logiciel ou une combinaison de matériel informatique et de logiciel, configuré pour exécuter au moins une tâche particulière.

Le module d'espace virtuel MEV détermine un environnement virtuel comprenant un ou plusieurs espaces virtuels publics et des espaces virtuels privés. Chaque espace virtuel public permet un accès à un ou plusieurs espaces virtuels privés.

Le module d'espace virtuel MEV détermine en outre l'emplacement d'un espace virtuel privé, qualifié d'espace personnel, pour chaque utilisateur dans l'environnement virtuel.

Par exemple, l'environnement virtuel correspond à une représentation schématique de la disposition des bureaux d'une entreprise, chaque espace virtuel public correspondant à un couloir et chaque espace virtuel privé correspondant à un bureau accessible depuis un couloir.

Chaque utilisateur possède un espace virtuel privé qui lui est propre et sur lequel il peut effectuer certaines actions décrites ci-après. Un tel utilisateur peut être assimilé au propriétaire d'un bureau. Le système de communication selon l'invention permet à un utilisateur de rendre visite à un autre utilisateur, par exemple pour avoir une communication vidéo ou une communication vidéo et audio avec ce dernier.

Pour une meilleure compréhension de l'invention, un premier utilisateur présent dans un espace virtuel donné, privé ou public, est qualifié de "visité" tandis qu'un deuxième utilisateur arrivant dans cet espace virtuel donné, dans lequel est déjà présent le premier utilisateur, est qualifié de "visiteur". Généralement, le visité est présent dans l'espace virtuel privé qui lui est propre.

De manière virtuelle, chaque espace virtuel privé a une porte, ou métaphore similaire, qui peut être verrouillée ou déverrouillée. La porte correspond à un accès à l'espace virtuel privé depuis l'espace virtuel public. Si la porte est déverrouillée, un visiteur peut entrer dans l'espace virtuel privé de sa propre initiative. Si la porte est verrouillée, un visiteur peut entrer dans l'espace virtuel privé seulement sur l'initiative du visité qui est l'utilisateur contrôlant l'espace virtuel privé et/ou des utilisateurs déjà présents virtuellement dans l'espace privé du visité.

Chaque espace virtuel privé, appelé bureau ci-après, a en outre une fenêtre, ou métaphore similaire, qui peut avoir trois niveaux de transparence vis-à-vis de l'espace virtuel public, appelé ci-après couloir : transparent, semi-transparent et opaque.

Si la fenêtre est transparente, un visiteur dans le couloir peut voir le visité dans le bureau, et le visité peut voir le visiteur dans le couloir.

Si la fenêtre est semi-transparente, un visiteur dans le couloir ne peut pas voir le visité dans le bureau, alors que le visité peut voir le visiteur dans le couloir.

Si la fenêtre est opaque, un visiteur dans le couloir ne peut pas voir le visité dans le bureau, et le visité ne peut pas voir le visiteur dans le couloir.

Ainsi, le visité peut contrôler sa visibilité pour un visiteur dans le couloir. Et le visiteur est informé s'il est visible ou non par le visité.

Le module de présence MP actualise l'état de présence de chaque utilisateur qui s'est inscrit auprès du serveur de communication SC. Lorsqu'un utilisateur est inscrit auprès du serveur de communication SC, le module de présence MP crée un profil d'utilisateur comprenant notamment un identificateur IdU de l'utilisateur.

Lorsque le terminal TU de l'utilisateur est connecté au serveur de communication SC, l'identificateur de l'utilisateur IdU est à un état "connecté", et lorsque le terminal TU de l'utilisateur est déconnecté du serveur de communication SC, l'identificateur de l'utilisateur IdU est à un état "déconnecté".

Par ailleurs, le module de présence MP mémorise chaque identificateur d'utilisateur IdU en correspondance avec un identificateur du terminal de l'utilisateur, afin d'établir des communications multimédias entre les terminaux des utilisateurs.

Lorsque l'utilisateur souhaite se déplacer dans l'environnement virtuel, l'utilisateur peut sélectionner un espace virtuel, public ou privé, à l'aide d'une interface homme-machine du terminal de l'utilisateur. En collaboration avec le module de présence MP, le module d'espace virtuel MEV détermine en temps réel l'emplacement de l'utilisateur dans l'environnement virtuel, par exemple en associant l'identificateur de l'utilisateur IdU à un identificateur de l'espace virtuel sélectionné par l'utilisateur.

Initialement, chaque utilisateur possède un espace personnel qui est un espace virtuel privé contrôlé par l'utilisateur. Le profil de l'utilisateur comprend alors, outre l'identificateur de l'utilisateur IdU, un identificateur IdEP de l'espace personnel.

Optionnellement, d'autres utilisateurs, qui sont autorisés à utiliser les services offerts par le serveur SC, n'ont pas d'espace personnel et sont initialement présents dans un espace virtuel public. De tels utilisateurs peuvent néanmoins rendre visite à d'autres utilisateurs dans les espaces personnels de ces derniers.

Lorsque l'utilisateur sélectionne un espace virtuel public, l'utilisateur est déplacé directement dans cet espace virtuel public. Dans ce cas, l'identificateur de l'utilisateur IdU est associé à un identificateur IdPu de l'espace virtuel public.

Lorsque l'utilisateur sélectionne un espace virtuel privé, l'utilisateur est déplacé dans l'espace virtuel public permettant l'accès à cet espace virtuel privé. Dans ce cas, l'identificateur de l'utilisateur IdU est associé à la fois à un identificateur IdPu de l'espace virtuel public et à un identificateur IdPr de l'espace virtuel privé.

L'identificateur de l'utilisateur IdU et l'identificateur d'espace personnel IdEP sont considérés liés entre eux, alors que l'identificateur de l'utilisateur IdU peut être associé temporairement à un identificateur d'espace virtuel IdPr ou IdPu lorsque l'utilisateur se déplace dans cet espace virtuel. Il sera entendu que l'identificateur d'espace personnel IdEP pour un utilisateur visité correspond à un identificateur IdPr d'un espace virtuel privé sélectionné par un utilisateur visiteur.

Selon une réalisation de l'invention, via une interface homme-machine du terminal, un espace virtuel public et les espaces virtuels privés correspondants, c'est-à-dire accessibles depuis l'espace virtuel public, peuvent être représentés par une liste de noms d'utilisateurs, l'intitulé de la liste correspondant à l'espace virtuel public et le nom d'un utilisateur correspondant à l'espace virtuel privé associé à l'utilisateur. Selon d'autres exemples, un espace virtuel privé peut correspondre à une image ou à un pseudo d'un utilisateur.

Lorsque l'utilisateur sélectionne l'intitulé de la liste, l'utilisateur est déplacé dans le couloir, sans être devant un bureau d'un utilisateur.

Lorsque l'utilisateur, qualifié de "visiteur", sélectionne le nom d'un utilisateur, qualifié de "visité", l'utilisateur est déplacé dans le couloir devant le bureau du visité. Dans ce cas, une communication vidéo est établie automatiquement entre le visiteur et le visité, en fonction du niveau de transparence de la fenêtre du bureau du visité.

Si la fenêtre est transparente, le visiteur et le visité reçoivent un flux vidéo respectivement du visité et du visiteur.

Si la fenêtre est opaque, le visiteur et le visité ne reçoivent aucun flux vidéo respectivement du visité et du visiteur.

Si la fenêtre est semi-transparente, le visité reçoit un flux vidéo du visiteur alors que le visiteur ne reçoit aucun flux vidéo du visité. Optionnellement, le visiteur est informé, par un avertissement graphique ou un signal sonore, que la fenêtre est semi-transparente, et donc qu'il peut être vu par le visité. Par ailleurs, le visité a la possibilité de configurer des niveaux de transparence de la fenêtre respectivement pour certains visiteurs, et un niveau de transparence par défaut pour tous les autres visiteurs.

A cette fin, le module d'espace virtuel MEV associe initialement un indicateur de transparence IndT à l'identificateur d'espace personnel IdEP contrôlé par le visité. Sous la commande du visité, le module MEV met l'indicateur de transparence IndT à un état "T" si la fenêtre est transparente (IndT = "T"), à un état "ST" si la fenêtre est semi-transparente (IndT = "ST"), ou à un état "O" si la fenêtre est opaque (IndT = "T").

Il peut être considéré que la porte d'un espace privé est verrouillée par rapport à l'espace public donnant accès à l'espace privé, c'est-à-dire par rapport à un visiteur souhaitant entrer dans l'espace privé. Tout utilisateur, visité comme visiteur, déjà présent dans l'espace privé peut commander l'ouverture de la porte pour faire entrer spécifiquement un autre utilisateur en attente dans l'espace public sans modifier l'état de verrouillage de la porte. En outre, l'utilisateur propriétaire de l'espace personnel peut être considéré comme possédant un badge lui permettant d'entrer ou de sortir de l'espace personnel sans modifier l'état de verrouillage de la porte de l'espace personnel.

Par ailleurs, si le visité configure des niveaux de transparence de la fenêtre respectivement pour certains visiteurs, le module MEV associe chacun des trois indicateurs de transparence IndT de chaque état à une liste d'identificateurs d'utilisateur IdU.

Ainsi, lorsqu'un visiteur souhaite rendre visite à un visité en sélectionnant le nom du visité, le module MEV identifie l'identificateur IdU du visité et recherche l'identificateur d'espace personnel IdEP lié à l'identificateur IdU dans le profil d'utilisateur du visité.

Le module MEV analyse ensuite l'état de l'indicateur de transparence IndT associé à l'identificateur IdEP. Si l'identificateur IdEP est associé aux différents indicateurs de transparence IndT de chaque état, le module MEV identifie l'indicateur de transparence IndT qui est associé à la liste contenant l'identificateur IdU du visiteur pour déterminer les flux vidéos possibles.

Par ailleurs, le module d'espace virtuel MEV associe initialement un indicateur de verrouillage IndV à l'identificateur d'espace personnel IdEP contrôlé par le visité, pour indiquer si la porte du bureau est verrouillée ou non. Sous la commande du visité, le module MEV met l'indicateur de verrouillage IndV à un état "0" si la porte est déverrouillée (IndV = "0"), ou à un état "1" si la porte est verrouillée (IndV = "1"). Si la porte est verrouillée, un visiteur devant le bureau ne peut pas entrer de sa propre initiative.

Optionnellement, comme pour l'indicateur de transparence IndT, le visité a la possibilité de configurer l'état de verrouillage de la porte pour certains visiteurs, et un état de verrouillage par défaut pour tous les autres visiteurs.

Selon une réalisation de l'invention, via une interface homme-machine du terminal, chaque utilisateur dispose sur son écran de terminal de différentes zones graphiques. Par exemple, les différentes zones graphiques comprennent une zone de contacts où apparait la liste de noms d'utilisateurs, une zone de présence représentant un espace virtuel où est présent l'utilisateur, et une zone d'accès représentant le ou les espaces virtuels accessibles depuis l'espace virtuel où est présent l'utilisateur. L'espace virtuel accessible est par exemple un espace virtuel où souhaite se rendre l'utilisateur.

Par exemple, lorsqu'un visiteur sélectionne le nom du visité, le visiteur est déplacé dans le couloir devant le bureau du visité. Sur l'écran du terminal du visiteur, la zone de présence représente le couloir où est présent le visiteur et la zone d'accès représente le bureau où souhaite se rendre le visiteur. Sur l'écran du terminal du visité, la zone de présence représente le bureau où est présent le visité et la zone d'accès représente le couloir accessible depuis le bureau.

Lorsqu'un visiteur sélectionne le nom du visité, le visiteur est déplacé dans le couloir devant le bureau du visité. Une communication vidéo est établie automatiquement entre le visiteur et le visité, en fonction du niveau de transparence de la fenêtre du bureau du visité. Optionnellement, préalablement à l'établissement de la communication vidéo, une image du visiteur, telle qu'une photographie, et/ou un pseudo du visiteur, apparaît dans la zone d'accès du visité, et un avertissement sonore, par exemple un bruit de pas, est produit pour avertir le visité que le visiteur situé dans le couloir est prêt à entrer en communication vidéo et éventuellement audio avec le visité. L'avertissement sonore est par exemple produit quelques secondes avant l'établissement de la communication vidéo.

Sur l'écran du terminal, le visiteur, ainsi que le visité, peut voir les vidéos du visité et du visiteur, respectivement dans les zones représentant le bureau et le couloir, lorsque la fenêtre est transparente, c'est-à-dire lorsque de l'indicateur de transparence IndT associé à l'identificateur IdEP du bureau est à l'état "T" par rapport à l'identificateur IdU du visiteur. A titre d'exemples, le visité peut faire des signes au visiteur pour lui montrer son état d'occupation ou de disponibilité, et le visiteur peut expliquer gestuellement l'importance de sa visite.

Optionnellement, après l'établissement de la communication vidéo entre le visiteur et le visité, lorsque le visiteur est en attente dans le couloir devant le bureau du visité, le visiteur peut avertir le visité de sa présence par un ou plusieurs avertissements sonores d'un ou de plusieurs types. Selon un exemple, un avertissement sonore est discret et peu élevé et peut correspondre à une action de tapoter sur la porte du visité pour faire part de la présence du visiteur. Selon un autre exemple, un avertissement sonore est plus élevé et peut correspondre à une action de frapper sur la porte du visité pour faire part de la volonté du visiteur d'entrer dans le bureau du visité.

Une communication audio peut être établie entre le visité et le visiteur à la demande du visité. Dans ce cas, il peut être considéré que le visité fait entrer le visiteur dans le bureau. Par ailleurs, le module d'espace virtuel MEV associe l'identificateur IdU du visité seulement à l'identificateur IdPr du bureau, et l'identificateur IdU du visité n'est plus associé à l'identificateur IdPu du couloir puisque le visiteur n'est plus dans le couloir.

Si la porte du bureau n'est pas verrouillée, le visiteur peut entrer dans le bureau de sa propre initiative et ainsi établir une communication audio avec le visité. Si la porte du bureau est verrouillée, seul le visité peut autoriser l'établissement d'une communication audio.

Par exemple, le visiteur ou le visité peut demander l'établissement de la communication audio via l'interface homme-machine du terminal au moyen d'une commande vocale ou d'une zone graphique interactive, telle qu'un bouton de commande.

Par ailleurs, la liste de noms d'utilisateurs affichée dans la zone de contacts indique l'état "connecté" ou "déconnecté" de chaque utilisateur, par exemple de manière classique au moyen d'un point vert ou rouge devant le nom de l'utilisateur. Lorsqu'un utilisateur donné n'est pas connecté au serveur SC, les autres utilisateurs peuvent néanmoins optionnellement accéder à l'espace personnel de l'utilisateur donné, par exemple pour attendre l'utilisateur donné.

Selon un exemple d'implémentation, pour l'établissement une communication vidéo entre un visité et un visiteur, le module d'espace virtuel MEV détermine d'abord l'identificateur d'espace personnel IdEP lié à l'identificateur IdU du visité lorsque le visiteur a sélectionné le nom du visité. Le module MEV associe alors l'identificateur IdU du visiteur à identificateur IdPu de l'espace public donnant accès à l'espace personnel du visité et ainsi qu'à identificateur d'espace privé IdPr correspondant à l'identificateur d'espace personnel IdEP.

Le module MEV analyse ensuite l'état de l'indicateur de transparence IndT associé à l'identificateur IdEP par rapport à l'identificateur IdU du visiteur. Le module MEV commande au module de communication multimédia MCM l'établissement une communication vidéo entre le visité et le visiteur en fonction de l'état de l'indicateur de transparence IndT.

Le module MEV commande au module de communication multimédia MCM l'établissement une communication audio entre le visité et le visiteur lorsque l'un d'eux en fait la demande. Si le visiteur fait cette demande, le module MEV commande le module de communication multimédia MCM seulement si l'indicateur de verrouillage IndV associé à l'identificateur IdEP n'est pas à l'état verrouillé "1" par rapport à l'identificateur IdU du visiteur.

Dans un cas particulier, plusieurs utilisateurs peuvent être présents dans un espace virtuel public, par exemple en attente d'entrer en communication audio avec des visités particuliers. Chacun des utilisateurs aperçoit sur son écran de terminal dans la zone de présence une image et/ou un pseudo des autres utilisateurs. Le serveur SC peut effectuer une corrélation entre les identificateurs de ces utilisateurs qui sont associés au même identificateur d'espace public, afin d'informer chaque utilisateur de la présence des autres utilisateurs dans cet espace public.

Dans un autre cas particulier, un premier visiteur et un deuxième visiteur peuvent souhaiter rendre visite en même temps à un visité dans son bureau. Dans ce cas, le module de communication multimédia MCM gère une conférence multimédia dont les flux vidéo et audio dépendent de l'emplacement des visiteurs dans l'environnement virtuel.

Selon une première possibilité, les deux visiteurs se retrouvent dans le couloir devant le bureau du visité. Le visité est alors en communication vidéo avec chacun des visiteurs tandis que les deux visiteurs sont en communication audio et vidéo, ce qui leur permet par exemple de déterminer s'ils vont entrer ensemble, ou si l'un d'eux doit repasser plus tard. Une alternative consiste à ne pas mettre les deux visités en communication entre eux, tout en les tenant toutefois informés chacun de la présence de l'autre visiteur dans le couloir, par exemple au moyen de l'affichage d'une image et/ou du nom de l'autre visiteur dans la zone de présence.

Selon une deuxième possibilité, le premier visiteur est dans le bureau tandis que le deuxième visiteur est dans le couloir. Le visité est alors en communication vidéo et audio avec le premier visiteur tandis le deuxième visiteur est en communication vidéo avec d'une part avec le visité et d'autre part avec le premier visiteur.

Selon une troisième possibilité, les deux visiteurs se retrouvent dans le bureau du visité. Le visité et les deux visiteurs sont alors en communication vidéo et audio entre eux.

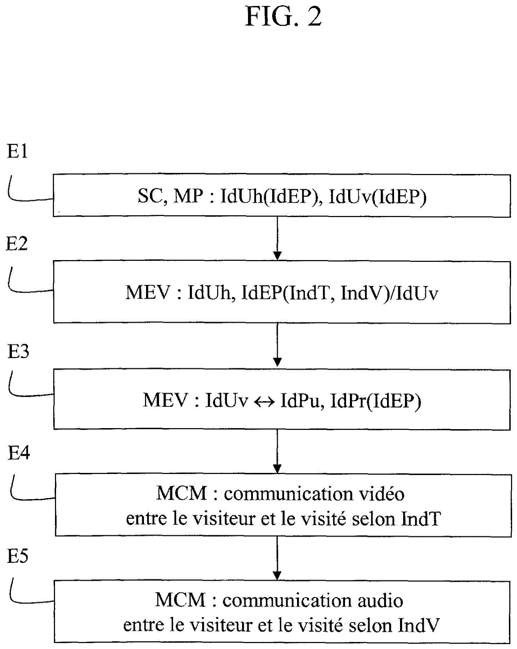

En référence à la figure 2, un procédé d'établissement de communication selon une réalisation de l'invention comprend des étapes E1 à E5 exécutées dans le système de communication selon l'invention.

Initialement, au moins deux utilisateurs sont connectés au serveur de communications SC. Selon une réalisation de l'invention, un premier utilisateur qualifié de "visiteur" souhaite parler à un deuxième utilisateur qualifié de "visité".

A l'étape E1, les terminaux du visité et du visiteur, à la demande de ces derniers, lancent une application logicielle et se connectent au serveur de communication SC.

Lorsque le visité ou le visiteur se connecte pour la première fois au serveur SC, le module de présence MP crée un profil d'utilisateur dans lequel sont mémorisés en correspondance un identificateur IdU de l'utilisateur et un identificateur du terminal de l'utilisateur.

Pour une meilleure compréhension de l'invention, l'identificateur du visiteur est référencé IdUv et l'identificateur du visité est référencé IdUh.

Le module de présence MP met chacun des identificateurs d'utilisateur IdUv et IdUh à l'état connecté.

Par ailleurs, les identificateurs du visité IdUh et du visiteur IdUv sont mémorisés en correspondance respectivement avec des identificateurs IdEP des espaces personnels contrôlés respectivement par le visité et le visiteur.

A l'étape E2, le visité et le visiteur configurent respectivement leurs espaces personnels. Ci-après est décrite seulement la configuration de l'espace personnel du visité, la configuration de l'espace personnel du visiteur étant similaire.

Dans le profil d'utilisateur du visité, l'identificateur d'espace personnel IdEP est mémorisé en correspondance avec un indicateur de transparence IndT et un indicateur de verrouillage IndV.

Sous la commande du visité, le module MEV met l'indicateur de transparence IndT à l'état "T", "ST" ou "O" par rapport à l'identificateur du visiteur IdUv, et met en outre l'indicateur de verrouillage IndV à l'état "0" ou "1" par rapport à l'identificateur du visiteur IdUv.

En variante, les étapes E1 et E2 sont effectuées par un administrateur du serveur SC, qui déclare dans le système les caractéristiques des utilisateurs et de leurs espaces personnels. Par exemple, l'administrateur décide dans quel couloir se trouvera chaque bureau. Par exemple, certains utilisateurs peuvent se voir attribuer des bureaux dans lesquels la porte est obligatoirement déverrouillée et la fenêtre est obligatoirement transparente.

A l'étape E3, le visiteur sélectionne le nom d'utilisateur du visité dans la zone de contacts dans le but de rendre visite et de parler au visité dans l'espace personnel du visité.

Le module MEV identifie l'identificateur IdUh du visité et recherche l'identificateur d'espace virtuel privé IdPr correspondant à l'identificateur d'espace personnel IdEP lié à l'identificateur IdUh dans le profil d'utilisateur du visité.

Le module MEV associe temporairement l'identificateur IdUv du visiteur à l'identificateur IdPr trouvé de l'espace virtuel privé, c'est-à-dire de l'espace personnel du visité, et à l'identificateur IdPu de l'espace public donnant accès à l'espace personnel du visité. Le visiteur est ainsi déplacé virtuellement dans l'espace public donnant accès à l'espace personnel du visité.

Après avoir interrogé le module MEV du serveur SC, le terminal du visiteur affiche dans la zone de présence la vidéo du visiteur et une indication sur l'espace virtuel public, par exemple le nom de ce dernier qui peut être "couloir A" pour informer le visiteur de son emplacement dans l'environnement virtuel. Le terminal affiche en outre dans la zone d'accès une image, telle qu'une photographie, du visité et une indication sur l'espace personnel du visité, par exemple le nom de ce dernier qui peut être "bureau du visité".

En parallèle, le terminal du visité interroge également le module MEV du serveur SC, ou est notifié par le module MEV, pour actualiser des informations relatives aux autres utilisateurs dans l'environnement virtuel. Notamment, le terminal du visité affiche dans la zone de présence la vidéo du visité et une indication sur l'espace personnel du visité, et affiche en outre dans la zone d'accès une image, telle qu'une photographie, du visiteur et une indication sur l'espace virtuel public.

Optionnellement, un avertissement sonore est produit pour avertir le visité que le visiteur est situé dans le couloir et est prêt à entrer en communication avec le visité.

A l'étape E4, en collaboration avec le module MEV, le module de communication multimédia MCM établit une communication vidéo entre le visiteur et le visité en fonction de l'état de l'indicateur de transparence IndT associé à l'identificateur d'espace personnel IdEP.

Par exemple, l'indicateur de transparence IndT est à l'état "T" et une communication vidéo bidirectionnelle entre le visiteur et le visité est établie. Dans ce cas, le terminal du visiteur affiche dans la zone d'accès la vidéo du visité et le terminal du visité affiche dans la zone d'accès la vidéo du visité.

A l'étape E5, le module de communication multimédia MCM établit une communication audio entre le visité et le visiteur lorsque l'un d'eux en fait la demande, après un déplacement virtuel du visiteur depuis l'espace virtuel public dans l'espace personnel du visité. Si le visité fait cette demande, le visiteur est déplacé dans l'espace personnel du visité et cette communication audio est établie. Si le visiteur fait cette demande, le module MCM interroge le module MEV pour vérifier l'état de l'indicateur de verrouillage IndV associé à identificateur IdEP. Si l'indicateur de verrouillage IndV est à l'état "0", le visiteur est déplacé virtuellement dans l'espace personnel du visité et la communication audio est établie tandis que si l'indicateur de verrouillage IndV est à l'état "1", le visiteur n'est pas déplacé virtuellement dans l'espace personnel du visité et la communication audio est refusée et n'est pas établie. L'utilisateur visiteur est donc déplacé virtuellement dans l'espace personnel de l'utilisateur visité à la demande de l'utilisateur visiteur, si le visité a préalablement autorisé l'accès à son espace personnel pour l'utilisateur visiteur.

Lorsque cette communication audio est établie, le visiteur est déplacé virtuellement depuis l'espace virtuel public dans l'espace personnel du visité. Pour le terminal du visiteur, la zone de présence correspond à présent à l'espace personnel du visité, et la zone de présence correspond à présent à l'espace virtuel public.

En outre, les terminaux du visiteur et du visité affichent chacun dans la zone de présence les vidéos du visiteur et du visité, tandis qu'aucune image ou vidéo n'est affichée dans la zone d'accès.

Au final, le visiteur et le visité sont en communication vidéo et audio dans l'espace personnel du visité.

L'invention décrite ici concerne un procédé et un serveur pour établir une communication multimédia entre au moins deux utilisateurs à travers un réseau de paquets. Selon une implémentation de l'invention, les étapes du procédé de l'invention sont déterminées par les instructions d'un programme d'ordinateur incorporé dans un serveur, tel que le serveur de communication SC. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour établir une communication multimédia entre un utilisateur visité et au moins un utilisateur visiteur qui sont tous deux initialement virtuellement présents respectivement dans des espaces virtuels différents dans un environnement virtuel géré par un serveur (SC) auquel sont connectés des terminaux (TU) respectifs de l'utilisateur visiteur et de l'utilisateur visité, **caractérisé en ce qu'**il comprend les étapes suivantes :
effectuer un premier déplacement virtuel de l'utilisateur visiteur vers un premier espace virtuel donnant accès à un second espace virtuel dans lequel est présent l'utilisateur visité et qui est différent du premier espace virtuel, établir une communication uniquement vidéo entre l'utilisateur visité et l'utilisateur, visiteur en réponse audit premier déplacement virtuel,
effectuer un second déplacement virtuel de l'utilisateur visiteur du premier vers le second espace virtuel, et établir une communication audio entre l'utilisateur visité et l'utilisateur visiteur en réponse audit second déplacement virtuel.

2. Procédé selon la revendication 1, selon lequel l'utilisateur visité reçoit un avertissement visuel et/ou sonore concernant ledit premier déplacement virtuel avant l'établissement de la communication vidéo entre l'utilisateur visité et l'utilisateur visiteur.

3. Procédé selon la revendication 1 ou 2, selon lequel ledit second déplacement virtuel n'est effectué à la demande de l'utilisateur visiteur, que si l'utilisateur visité a préalablement autorisé l'accès audit second espace virtuel.

4. Procédé selon la revendication 3, selon lequel ledit second espace virtuel est associé à un indicateur de verrouillage (IndV) à un premier état, configuré initialement par l'utilisateur visité.

5. Procédé selon la revendication 1 ou 2, selon lequel ledit second déplacement virtuel est effectué en réponse à la demande de l'utilisateur visité.

6. Procédé selon la revendication 5, selon lequel ledit second espace virtuel est associé à un indicateur de verrouillage (IndV) à un deuxième état ou au premier état, configuré initialement par l'utilisateur visité.

7. Procédé selon l'une des revendications 1 à 6, selon lequel lors de la communication vidéo entre l'utilisateur visité et l'utilisateur visiteur, aucun flux de communication vidéo émis par l'utilisateur visité n'est reçu par l'utilisateur visiteur.

8. Procédé selon la revendication 7, selon lequel ledit second espace virtuel est associé à un indicateur de transparence (IndT) à un premier état, configuré initialement par l'utilisateur visité.

9. Procédé selon la revendication 7 ou 8, selon lequel aucun flux de communication vidéo émis par l'utilisateur visiteur n'est reçu par l'utilisateur visité.

10. Procédé selon la revendication 9, selon lequel ledit second espace virtuel est associé à un indicateur de transparence (IndT) à un deuxième état, configuré initialement par l'utilisateur visité.

11. Serveur (SC) pour établir une communication multimédia entre un utilisateur visité et au moins un utilisateur visiteur qui sont tous deux initialement virtuellement présents respectivement dans des espaces virtuels différents dans un environnement virtuel géré par le serveur (SC) auquel sont connectés des terminaux (TU) respectifs de l'utilisateur visiteur et de l'utilisateur visité, **caractérisé en ce qu'**il comprend :
des moyens (MCM) pour établir une communication uniquement vidéo entre l'utilisateur visité et l'utilisateur visiteur, en réponse à un premier déplacement virtuel de l'utilisateur visiteur vers un premier espace virtuel donnant accès à un second espace virtuel dans lequel est présent l'utilisateur visité et qui est différent du premier espace virtuel, et
des moyens (MCM) pour établir une communication audio entre l'utilisateur visité et l'utilisateur visiteur, en réponse à un second déplacement virtuel de l'utilisateur visiteur du premier vers le second espace virtuel.

12. Programme d'ordinateur apte à être mis en oeuvre dans un serveur (SC) pour établir une communication multimédia entre un utilisateur visité et au moins un utilisateur visiteur qui sont tous deux initialement virtuellement présents respectivement dans des espaces virtuels différents dans un environnement virtuel géré par le serveur (SC) auquel sont connectés des terminaux (TU) respectifs de l'utilisateur visiteur et de l'utilisateur visité, ledit programme étant **caractérisé en ce qu'**il comprend des instructions qui, lorsque le programme est chargé et exécuté dans ledit serveur, réalisent les étapes suivantes :
effectuer un premier déplacement virtuel de l'utilisateur visiteur vers un premier espace virtuel donnant accès à un second espace visité et qui est différend virtuel dans lequel est présent l'utilisateur visité et qui est différent du premier espace virtuel, établir une communication uniquement vidéo entre l'utilisateur visité et l'utilisateur visiteur en réponse audit premier déplacement virtuel, effectuer un second déplacement virtuel de l'utilisateur visiteur du premier vers le second espace virtuel, et établir une communication audio entre l'utilisateur visité et l'utilisateur visiteur en réponse audit second déplacement virtuel.

## Patentansprüche

1. Verfahren zum Aufbau einer Multimediakommunikation zwischen einem besuchten Benutzer und mindestens einem besuchenden Benutzer, welche jeweils beide anfänglich in verschiedenen virtuellen Räumen einer virtuellen Umgebung virtuell präsent sind, die von einem Server (SC) generiert wird, mit welchem jeweilige Benutzergeräte (Terminaux d'Utilisateur, TU) des besuchenden Benutzers und des besuchten Benutzers verbunden sind, **dadurch gekennzeichnet, dass** das Verfahren die folgenden Schritte umfasst:
das Vornehmen einer ersten virtuellen Bewegung des besuchenden Benutzers zu einem ersten virtuellen Raum, welcher Zugang zu einem zweiten virtuellen Raum gewährt, in welchem der besuchte Benutzer präsent ist und der ein vom ersten virtuellen Raum verschiedener virtueller Raum ist,
den Aufbau einer reinen Videokommunikation zwischen dem besuchten Benutzer und dem besuchenden Benutzer in Reaktion auf besagte virtuelle Bewegung,
das Vornehmen einer zweiten virtuellen Bewegung des besuchenden Benutzers zu dem zweiten virtuellen Raum, und den Aufbau einer Audiokommunikation zwischen dem besuchten Benutzer und dem besuchenden Benutzer in Reaktion auf die besagte, zweite virtuelle Bewegung.

2. Verfahren nach Anspruch 1, wobei der besuchte Benutzer vor dem Aufbau der Videokommunikation zwischen dem besuchten Benutzer und dem besuchenden Benutzer einen visuellen und/oder akustischen Warnhinweis bezüglich der besagten, ersten virtuellen Bewegung erhält.

3. Verfahren nach Anspruch 1 oder 2, wobei besagte zweite virtuelle Bewegung auf Anforderung des besuchenden Benutzers nur dann vorgenommen wird, wenn der besuchte Benutzer zuvor den Zugang zu besagtem zweitem virtuellem Raum autorisiert hat.

4. Verfahren nach Anspruch 3, wobei besagter zweiter virtueller Raum mit einem Sperrindikator (Indicateur de Verrouillage, IndV) in einem ersten Zustand assoziiert ist, der ursprünglich vom besuchten Benutzer konfiguriert wurde.

5. Verfahren nach Anspruch 1 oder 2, wobei besagte zweite virtuelle Bewegung in Reaktion auf die Anfrage des besuchten Benutzers erfolgt.

6. Verfahren nach Anspruch 5, wobei besagter zweiter virtueller Raum mit einem Sperrindikator (Indicateur de Verrouillage, IndV) in einem zweiten Zustand oder in einem ersten Zustand assoziiert ist, die ursprünglich vom besuchten Benutzer konfiguriert wurden.

7. Verfahren nach einem jeglichen der Ansprüche 1 bis 6, wobei während der Videokommunikation zwischen dem besuchten Benutzer und dem besuchenden Benutzer keinerlei Videokommunikationsfluss vom besuchenden Benutzer empfangen wird, der vom besuchten Benutzer gesendet wird.

8. Verfahren nach Anspruch 7, wobei besagter zweiter virtueller Raum mit einem Transparenzindikator (Indicateur de Transparence, IndT) in einem ersten Zustand assoziiert ist, der ursprünglich vom besuchten Benutzer konfiguriert wurde.

9. Verfahren nach Anspruch 7 oder 8, wobei keinerlei Videokommunikationsfluss vom besuchten Benutzer empfangen wird, der vom besuchenden Benutzer gesendet wird.

10. Verfahren nach Anspruch 9, wobei besagter zweiter virtueller Raum mit einem Transparenzindikator (Indicateur de Transparence, IndT) in einem zweiten Zustand assoziiert ist, der ursprünglich vom besuchten Benutzer konfiguriert wurde.

11. Server (SC) zum Aufbau einer Multimediakommunikation zwischen einem besuchten Benutzer und mindestens einem besuchenden Benutzer, welche jeweils beide anfänglich in verschiedenen virtuellen Räumen einer virtuellen Umgebung virtuell präsent sind, die von dem Server (SC) generiert wird, mit welchem jeweilige Benutzergeräte (TU) des besuchenden Benutzers und des besuchten Benutzers verbunden sind, **dadurch gekennzeichnet, dass** er umfasst:
Mittel (MCM) zum Aufbau einer reinen Videokommunikation zwischen dem besuchten Benutzer und dem besuchenden Benutzer in Reaktion auf eine erste virtuelle Bewegung des besuchenden Benutzers zu einem ersten virtuellen Raum, welcher Zugang zu einem zweiten virtuellen Raum gewährt, in welchem sich der besuchte Benutzer aufhält und der ein vom ersten virtuellen Raum verschiedener virtueller Raum ist, und
Mittel (MCM) zum Aufbau einer Audiokommunikation zwischen dem besuchten Benutzer und dem besuchenden Benutzer in Reaktion auf eine zweite virtuelle Bewegung des besuchenden Benutzers vom ersten zum zweiten virtuellen Raum.

12. Computerprogramm, ausgelegt, um auf einem Server (SC) ausgeführt zu werden und für den Aufbau einer Multimediakommunikation zwischen einem besuchten Benutzer und mindestens einem besuchenden Benutzer, welche jeweils beide anfänglich in verschiedenen virtuellen Räumen einer virtuellen Umgebung virtuell präsent sind, die von dem Server (SC) generiert wird, mit welchem jeweilige Benutzergeräte (TU) des besuchenden Benutzers und des besuchten Benutzers verbunden sind, wobei besagtes Programm **dadurch gekennzeichnet ist, dass** es Anweisungen umfasst, die dann, wenn das Programm auf besagtem Server geladen und ausgeführt wird, die folgenden Schritte durchführen:
das Vornehmen einer ersten virtuellen Bewegung des besuchenden Benutzers zu einem ersten virtuellen Raum, welcher Zugang zu einem zweiten virtuellen Raum gewährt, in welchem der besuchte Benutzer präsent ist und der ein vom ersten virtuellen Raum verschiedener virtueller Raum ist,
den Aufbau einer reinen Videokommunikation zwischen dem besuchten Benutzer und dem besuchenden Benutzer in Reaktion auf besagte virtuelle Bewegung,
das Vornehmen einer zweiten virtuellen Bewegung des besuchenden Benutzers zum zweiten virtuellen Raum, und
den Aufbau einer reinen Audiokommunikation zwischen dem besuchten Benutzer und dem besuchenden Benutzer in Reaktion auf besagte zweite virtuelle Bewegung.

## Claims

1. A method for establishing multimedia communication between a visited user and at least one visiting user who are both initially virtually present respectively in different virtual spaces in a virtual environment managed by a server (SC) to which respective terminals (TU) of the visiting user and visiting user are connected, characterized as such that it comprises the following steps:
performing a first virtual movement of the visiting user to a first virtual space granting access to a second virtual space in which the visited user is present, which is different from the first virtual space,
establishing a video-only communication between the visited user and the visiting user in response to said first virtual movement,
performing a second virtual movement of the visiting user from the first to the second virtual space, and establishing an audio communication between the visited user and the visiting user in response to said second virtual movement.

2. A method according to claim 1, whereby the visited user receives a visual and/or audible notification regarding said first virtual movement before video communication is established between the visited user and the visiting user.

3. A method according to claim 1 or 2, whereby said second virtual movement is performed at the request of the visiting user, only if the visited user has previously authorized access to said second virtual space.

4. A method according to claim 3, whereby said second virtual space is associated with a lock indicator (Indv) in a first state, initially configured by the visited user.

5. A method according to claim 1 or 2, whereby said second virtual movement is performed in response to the request of the visited user.

6. A method according to claim 5, whereby said second virtual space is associated with a lock indicator (IndV) in a second state or in the first state, initially configured by the visited user.

7. A method according to one of the claims 1 to 6, whereby during video communication between the visited user and the visiting user, no video communication flow sent by the visited user is received by the visiting user.

8. A method according to claim 7, whereby said second virtual space is associated with a transparency indicator (IndT) in a first state, initially configured by the visited user.

9. A method according to claim 7 and 8, whereby no video communication flow sent by the visiting user is received by the visited user.

10. A method according to claim 10, whereby said second virtual space is associated with a transparency indicator (IndT) in a second state, initially configured by the visited user.

11. A server (SC) for establishing multimedia communication between a visited user and at least one visiting user who are both initially virtually present respectively in different virtual spaces in a virtual environment managed by the server (SC) to which respective terminals (TU) of the visiting user and visiting user are connected, **characterized in that** it comprises:
means (MCM) for establishing a video-only communication between the visited user and the visiting user in response to a first virtual movement of the virtual user to a first virtual space granting access to a second virtual space in which the visited user is present, which is different from the first virtual space, and
means (MCM) for establishing an audio communication between the visited user and the visiting user in response to a second virtual movement of the visited user from the first to the second virtual space.

12. A computer program able to be implemented in a server (SC) for establishing a multimedia communication between a visited user and at least one visiting user who are both initially virtually present respectively in different virtual spaces in a virtual environment managed by a server (SC) to which respective terminals (TU) of the visiting user and visiting user are connected, **characterized in that** it comprises instructions which, when the program is loaded and run in said server, carry out the following steps:
performing a first virtual movement of the visiting user to a first virtual space granting access to a second virtual space in which the visited user is present, which is different from the first virtual space,
establishing a video-only communication between the visited user and the visiting user in response to said first virtual movement,
performing a second virtual movement of the visiting user from the first to the second virtual space, and establishing an audio communication between the visited user and the visiting user in response to said second virtual movement.
